Europäisches Patentamt

European Patent Office

Office européen des brevets

(11) Veröffentlichungsnummer: **0 167 518**
A2

# (12) EUROPÄISCHE PATENTANMELDUNG

(21) Anmeldenummer: 85890145.7

(22) Anmeldetag: 28.06.85

(51) Int. Cl.⁴: **A 01 M 7/00**
**B 05 B 3/10**

(30) Priorität: 04.07.84 AT 2156/84

(43) Veröffentlichungstag der Anmeldung:
08.01.86 Patentblatt 86/2

(84) Benannte Vertragsstaaten:
AT CH DE FR GB IT LI NL

(71) Anmelder: Ferdinand Krobath Maschinenfabrik
Franz Josef-Strasse 8-14
A-8330 Feldbach(AT)

(72) Erfinder: Keuschnigg, Josef, Dipl.-Ing.
Hammer Purgstallgasse 9
A-8330 Feldbach(AT)

(74) Vertreter: Holzer, Walter, Dipl.-Ing. et al,
Patentanwälte Dipl.-Ing. Dr.techn. Schütz Alfred
Dipl.-Ing. Dr.techn. Pfeifer Rudolf Dr.phil. Mrazek
Engelbert Dipl.-Ing. Holzer Walter Dipl.-Ing. Pfeifer Otto
Fleischmanngasse 9 A-1040 Wien(AT)

(54) Spritzgerät, insbesondere für landwirtschaftliche Zwecke.

(57) Spritzgerät, insbesondere für landwirtschaftliche Zwecke, mit einem von einem Fahrzeug abstützbaren Spritzmittelbehälter (2), aus dem mittels einer Pumpe (5) quer zur Fahrtrichtung orientierte Spritzdüsen (16) mit Spritzmittel gespeist werden, einem Axialgebläse (8), das einen Trägerluftstrom für das von den Düsen abgegebene Spritzmittel erzeugt, und einem Luftaustrittskanal (14) für den Trägerluftstrom, wobei der Spritzmittelbehälter ringförmig in sich geschlossen ausgebildet ist und einen das Gebläsegetriebe (6) und die Pumpe aufnehmenden Tunnel (4) bildet; zwecks Leistungserhöhung ist das Axialgebläse (8) als Doppelgebläse mit zwei axial hintereinander geschalteten Laufrädern (9, 10) ausgebildet, wobei das in axialer Richtung vordere Axialgebläse (9) die Gebläseluft stirnseitig über den Tunnel (4) ansaugt, wogegen das in axialer Richtung hintere Axialgebläse (10) über die hintere Gerätestirnseite ansaugt und wobei ein gemeinsamer Luftaustrittskanal (14) für beide Gebläse vorgesehen ist.

Fig. 1

EP 0 167 518 A2

Spritzgerät, insbesondere für landwirtschaftliche Zwecke

Die Erfindung betrifft ein Spritzgerät, insbesondere für landwirtschaftliche Zwecke, mit einem von einem Fahrzeug abstützbaren Spritzmittelbehälter, aus dem mittels einer Pumpe quer zur Fahrtrichtung orientierte Spritzdüsen mit Spritzmittel gespeist werden, einem Axialgebläse, das einen Trägerluftstrom für das von den Düsen abgegebene Spritzmittel erzeugt, und einem Luftaustrittskanal für den Trägerluftstrom, wobei der Spritzmittelbehälter ringförmig in sich geschlossen ausgebildet ist und einen das Gebläsegetriebe und die Pumpe aufnehmenden Tunnel bildet.

Ein Spritzgerät dieser Art ist aus einem älteren Vorschlag der Anmelderin bekannt. Das Spritzgerät kann insbesondere zum Spritzen von Raumkulturen, wie beispielsweise Obstkulturen, eingesetzt werden und hat nicht nur den Vorteil einer kompakten Ausbildung in der Längsrichtung, sondern ermöglicht zugleich eine hohe Eindringtiefe des Spritzmittels in die Raumkultur; insbesondere kann bei schneidendem Eindringen des mit Spritzmittel angereicherten Trägerluftstromes in die Raumkultur ein beidseitiger Spritzmittelbelag auf den Blättern gesichert werden.

Die vorliegende Erfindung zielt nun darauf ab, eine Verbesserung des Spritzgerätes der einleitend angegebenen Art zu erreichen, um auf einfache Weise die Gebläseleistung erhöhen bzw. bei gleicher Gebläseleistung die Geräuschentwicklung des Gerätes reduzieren zu können.

Dies wird erfindungsgemäß dadurch erreicht, daß das Axialgebläse als Doppelgebläse mit zwei axial hintereinander geschalteten Laufrädern ausgebildet ist, daß das in axialer Richtung vordere Axialgebläse die Gebläseluft stirnseitig über den Tunnel ansaugt, wogegen das in axialer Richtung hintere Axialgebläse über die hintere Gerätestirnseite ansaugt, und daß der die Spritzdüsen beaufschlagende, im wesentlichen quer zur Fahrtrichtung orientierte Luftaustrittskanal für beide Gebläse gemeinsam vorgesehen ist.

Die erfindungsgemäße Ausbildung sichert eine äußerst kompakte Bauweise des Gerätes in der Längsrichtung in Verbindung mit einer besonders günstigen Luftführung, die einen drallfreien Austritt der mit Spritzmittel beladenen Luft und einen hohen Wirkungsgrad gewährleistet. Durch die erfindungsgemäße Konstruktion wird entweder eine Steigerung der Gebläseluftleistung oder bei gleicher Leistung wie nach dem Stand der Technik eine Verringerung der Geräuschentwicklung und Antriebsleistung erreicht, letzteres deshalb, weil Gebläse kleinerer Leistung bei gleicher Drehzahl einen geringeren Geräuschpegel haben. Die Ausnützung des vom Spritzmittelbehälter begrenzten Tunnels zum Ansaugen der Gebläseluft ergibt vorteilhaft eine weitgehend beruhigte Ansaugluftströmung.

Es sei erwähnt, daß aus der DE-A 1,607.379 ein Spritzgerät mit einem Doppelgebläse und einem gemeinsamen Luftaustrittskanal für dieses bekannt ist, wobei aber das eine Gebläse axial und das andere radial ansaugt. Im gattungsmäßigen Gegensatz zur Erfindung ist ferner der Spritzmittelbehälter nicht ringförmig ausgebildet. Der wesentliche Nachteil der bekannten Konstruktion besteht darin, daß die Gebläseluft infolge der radialen Ansaugung mit Drall ausgeblasen wird, was zu einem ungleichmäßigen Spritzmittelbelag führt, eine höhere Antriebsleistung erfordert und den Wirkungsgrad verkleinert. Außerdem wird ein großer Anteil des ausgeblasenen Sprühmittelnebels und der ausgeblasenen Luft rückgesaugt.

Gemäß einer bevorzugten Ausführungsform der Erfindung, bei welcher dem Luftaustrittskanal für den Trägerluftstrom auf jeder Gebläseseite ein Umlenkboden zugeordnet ist und der Luftaustrittskanal in seinem unteren Teil über einen vorbestimmten Umfangsabschnitt verschlossen ist, ist in der Mitte zwischen den voneinander beabstandeten Umlenkböden eine sich quer zur Fahrtrichtung erstreckende Prallplatte angeordnet, die mit den Umlenkböden einen Luftumlenkkanal begrenzt, über welchen der im nach unten verschlossenen Umfangsabschnitt des Austrittskanals über eine Öffnung der Umlenkböden axial angesaugte Luftstrom über den offenen Umfangsabschnitt des Austrittskanals, dessen Winkelerstreckung vorzugsweise etwa 270° beträgt, im wesentlichen gleichmäßig verteilt wird. Hiedurch werden die Strömungsbedingungen im Luftaustrittskanal erheblich verbessert und damit die Wirkung der Vorrichtung erhöht.

Bei einer ähnlichen Ausführungsform kann der Luftaustrittskanal auch in seinem oberen Bereich über einen vorbestimmten Umfangsabschnitt von etwa 30 --60° verschlossen sein, so daß die Luft mittels der Prallplatte über die beiden offenen seitlichen Umfangsabschnitte des Luftaustrittskanals im wesentlichen gleichmäßig verteilt wird.

Eine andere Ausführungsform der Erfindung zeichnet sich dadurch aus, daß auf zumindest einem oberen Umfangsabschnitt des Luftaustrittskanals ein diesen verlängernder Aufsatz mit einer nach oben verschlossenen Umfangswand vorgesehen ist, wobei am unteren Ende des Aufsatzes eine diesem angepaßte Abdeckhaube mit geschlossener Umfangswand angelenkt ist, die vom Aufsatz in eine den Aufsatzbereich weiter verlängernde Stellung nach außen schwenkbar ist.

Gemäß einem weiteren Erfindungsmerkmal sitzen die Laufräder der beiden Axialgebläse auf einer gemeinsamen Antriebswelle und haben gegensinnig gekrümmte Laufschaufeln.

Weitere Merkmale der Erfindung werden nachfolgend an Ausführungsbeispielen unter Bezugnahme auf die Zeichnungen näher erläutert. Es zeigen:

Figur 1 einen Längsschnitt durch ein Gerät gemäß der Erfindung;

Figur 2 eine Stirnansicht des Gerätes nach Fig. 1 in Richtung 2;

Figur 3 eine Stirnansicht einer abgewandelten Ausführung;

Figur 4 einen Längsschnitt durch eine dritte Ausführungsform des Spritzgerätes gemäß der Erfindung;

Figur 5 einen Querschnitt nach der Linie 5-5 in Figur 4;

Figur 6 einen Querschnitt durch eine vierte Ausführungsform des erfindungsgemäßen Gerätes;

Figur 7 einen Längsschnitt durch eine fünfte Ausführungsform der Erfindung;

Figur 8 einen Querschnitt nach der Linie 8-8 in Figur 7;

Figur 9 einen Längsschnitt durch eine sechste Ausführungsform der Erfindung, und

Figur 10 einen Querschnitt nach der Linie 10-10 in Figur 9.

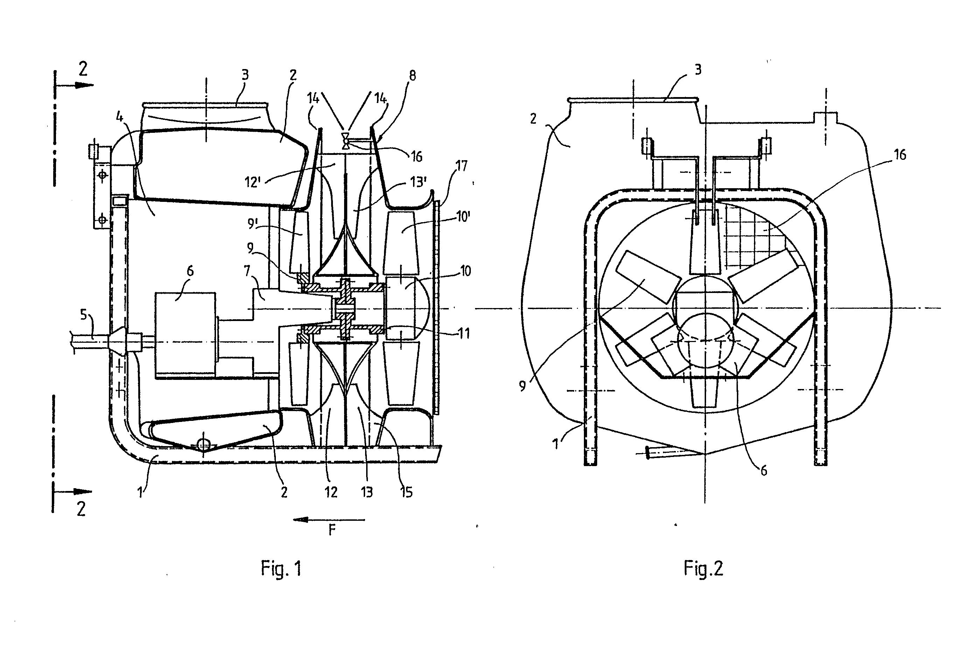

Das in Figur 1 gezeigte Gerät weist einen Rahmen 1 auf, mit dem es an einem Fahrzeug, z.B. einem Traktor, montierbar ist. Am Rahmen 1 ist ein Spritzmittelbehälter 2 befestigt, der insbesondere aus Kunststoff hergestellt und an seiner Oberseite mit einer Füllöffnung 3 versehen ist. Der Behälter 2 ist ringförmig in sich geschlossen ausgebildet und begrenzt eine tunnelartige Durchtrittsöffnung 4. In diesem Tunnel 4 sind eine Pumpe 5 und ein Getriebe 6 angeordnet, die von der Gelenkwelle 7 des Fahrzeuges angetrieben sind.

An den Tunnel 4 schließt ein Axialgebläse 8 an, das sich von der - in Fahrtrichtung (Pfeil F in Figur 1) gesehen - hinteren Stirnseite des Behälters 1 wegerstreckt und als Doppelgebläse ausgebildet ist, d.h. es hat zwei Laufräder 9 und 10, die axial hintereinander geschaltet sind und Schaufeln 9' bzw. 10' tragen. Beim gezeigten Ausführungsbeispiel sitzen die Laufräder auf einer gemeinsamen Welle 11. Die Gebläseluft wird vom vorderen Laufrad 9 über den Tunnel 4 und vom hinteren Laufrad 10 über die hintere Stirnseite der Vorrichtung angesaugt und über den Laufrädern zugeordnete, aneinanderstoßend montierte Umlenkböden 12, 13 und Leitschaufeln 12', 13' in einen gemeinsamen, im wesentlichen radial orientierten Luftaustrittskanal 14 gefördert. Die im Längsschnitt konisch verjüngte Kanalmündung kann sich z.B. in Umfangsrichtung über einen Winkel von etwa 240° erstrecken, wobei der untere Umfangsabschnitt des Luftaustrittskanals 14 durch einen Einsatz 15 od.dgl. verschlossen wird, der verhindert, daß die Gebläseluft auch gegen den Boden geblasen wird. Die Leitschaufeln 12', 13' sind im gemeinsamen Luftaustrittskanal 14 unter einem vorbestimmten Anstellwinkel zur Gebläseachse angeordnet und dienen zum Drallabbau im Trägerluftstrom.

Im Mündungsbereich des Luftaustrittskanales 14 ist ein Kranz von mit gegenseitigem Umfangsabstand angeordneten Spritzdüsen 16 (Figur 1) montiert, die beispielsweise hydraulische Düsen sind und über eine Leitung von der Pumpe 6, z.B. einer Membranpumpe, gespeist werden, welche ihrerseits mit dem Spritzmittelbehälter 2 in Verbindung steht. Die offene Hinterseite der Vorrichtung, über welche das hintere Gebläse ansaugt, ist mit einem Schutzgitter 17 abgedeckt.

Da bei der dargestellten Ausführungsform die beiden Laufräder 9, 10 auf einer gemeinsamen Welle 11 sitzen, sind ihre Laufschaufeln 9', 10' zur Gebläseachse gegensinnig geneigt montiert.

Gemäß einer nicht gezeigten abgewandelten Ausführungsform können die Laufräder auch auf einander umgebenden konzentrischen Wellen angeordnet sein und gegensinnig rotieren, wobei dann ihre Schaufeln gleichsinnig geneigt sind.

Bei einer ebenfalls nicht gezeigten Ausführungsform der Erfindung können zwischen dem Spritzmittelbehälter und dem diesem zugekehrten Axialgebläse zusätzliche Luftansaugöffnungen vorgesehen sein.

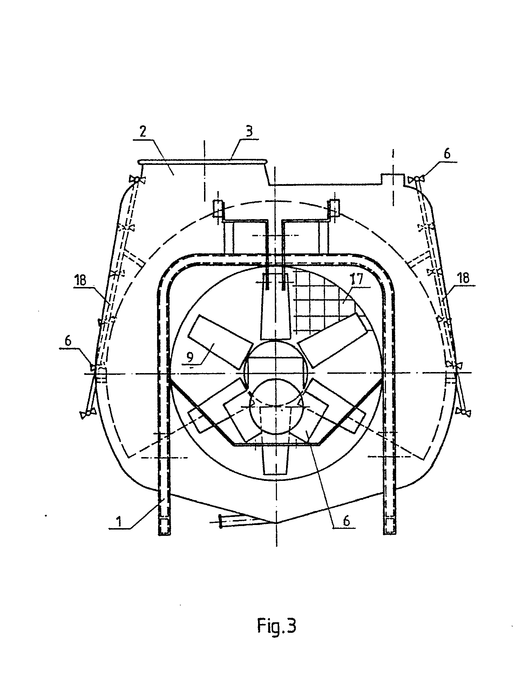

Bei der in Figur 3 gezeigten Ausführungsform sind anstelle eines Kranzes von Spritzdüsen 16, wie beim ersten Ausführungsbeispiel, im Ausblasbereich des Luftaustrittskanals 14 an diesem auf beiden Seiten des Gerätes Düsenleisten 18 montiert, die unter einem kleinen Winkel zur Vertikalen geneigt sind. Diese Ausbildung gewährleistet, daß das Spritzmittel in die Kulturen im wesentlichen nur seitlich eindringt.

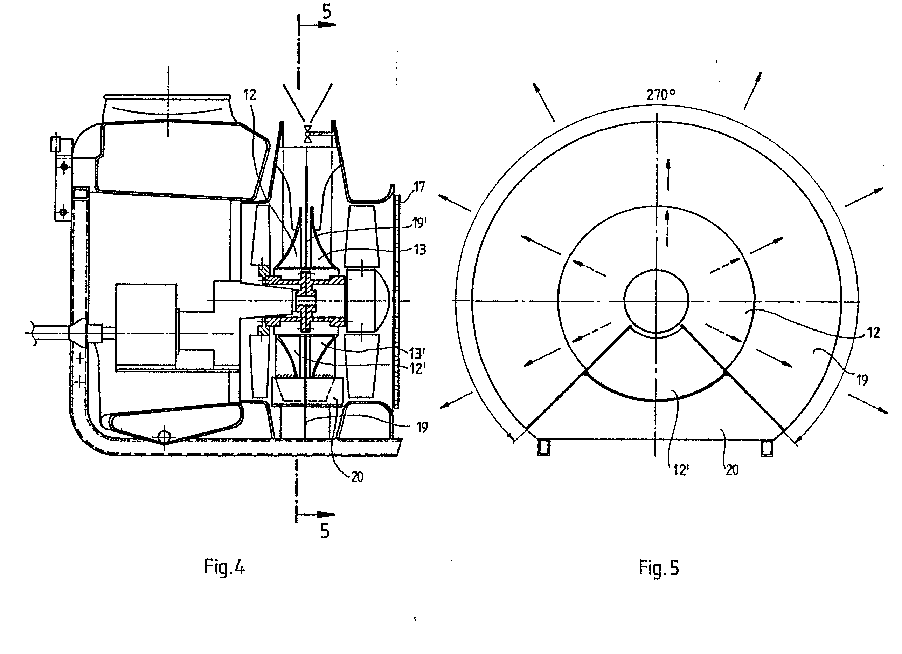

Bei der in Figur 4 gezeigten Ausführungsform ist im Gegensatz zu der in Figur 1 dargestellten zwischen den beabstandeten Umlenkböden 12, 13 der beiden Axialgebläse mit gleichem Abstand zu diesen eine Prallplatte 19 montiert, die sich quer zur Fahrtrichtung (Pfeil F) erstreckt. Diese Prallplatte hat die Aufgabe, gemeinsam mit den Umlenkböden 12, 13 axial angesaugte Luft, die im unteren, durch einen Einsatz 20 verschlossenen Teil des Luftaustrittskanals 14 über eine Öffnung 12' bzw. 13' der Umlenkböden angesaugt wird, über den offenen Umfangsabschnitt des Luftaustrittskanals im wesentlichen gleichmäßig zu verteilen. Dieser Umfangsabschnitt erstreckt sich bei der dargestellten Ausführungsform, wie Figur 5 zeigt, über etwa 270°. Die Prallplatte 19 begrenzt somit mit den Umlenkböden 12, 13 Luftumlenk- und -verteilkanäle 19'.

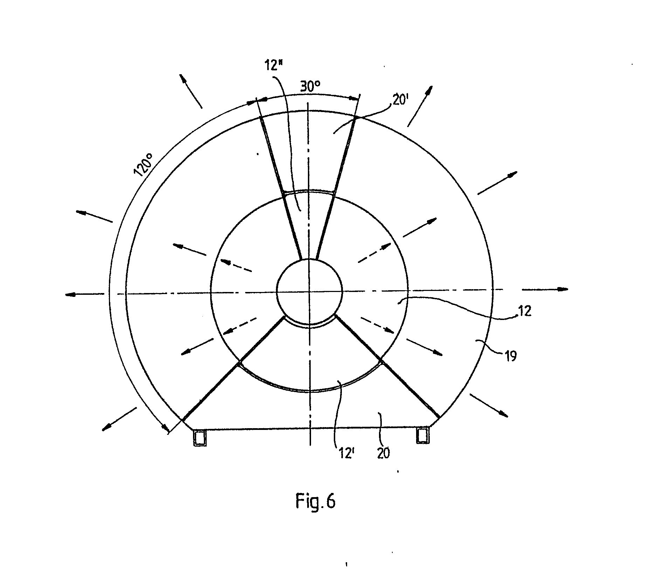

Bei der in Figur 6 dargestellten Ausführungsform ist auch ein oberer Umfangsabschnitt des Luftaustrittskanals 14 durch einen Einsatz 20' verschlossen, der sich über einen Winkel zwischen etwa 30° - 60° erstreckt, so daß die Luft nur über zwei seitliche Umfangsabschnitte austritt, die sich über je etwa 120° erstrecken. Auch in diesem Fall dient die Prallplatte 19 zur Verteilung der über Öffnungen 12', 12" der Umlenkböden 12, 13 axial anströmenden Luft über die seitlichen Umfangsabschnitte.

Es versteht sich, daß die Winkelerstreckung bzw. Umfangserstreckung der verschlossenen Abschnitte des Luftaustrittskanals dem Bedarf entsprechend verändert werden kann.

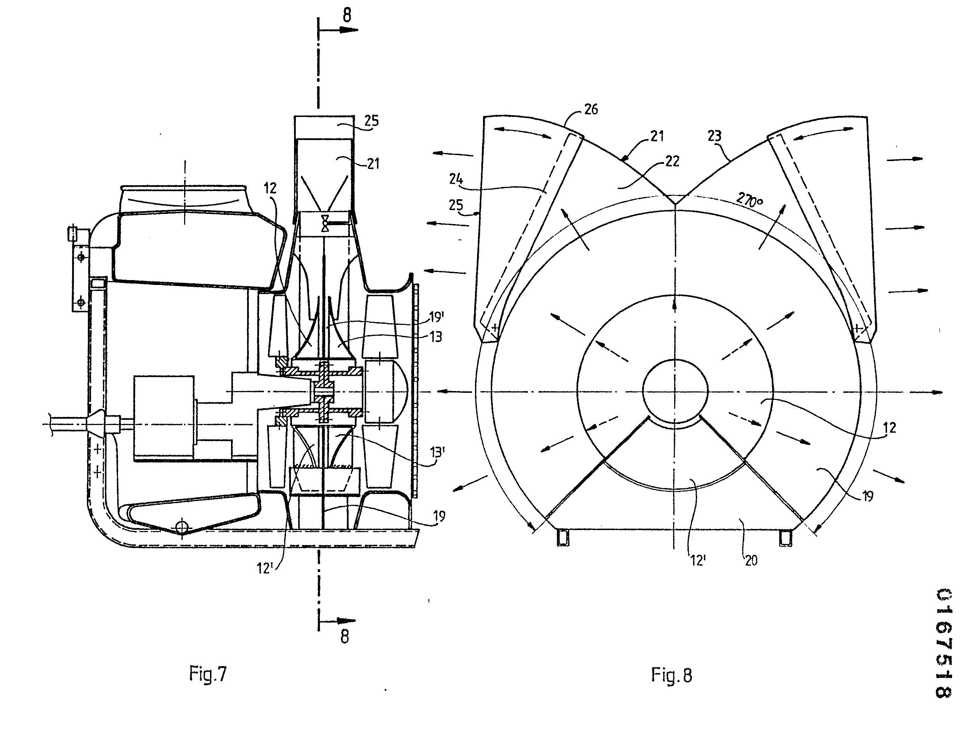

Bei der Ausführungsform nach den Figuren 7 und 8, deren Grundaufbau jener nach Figur 4 entspricht, ist über einem oberen Umfangsabschnitt des Luftaustrittskanals 14 ein im wesentlichen M-förmiger Aufsatz 21 vorgesehen, der den Kanal im wesentlichen nach oben verlängert und parallele Stirnwände 22, eine geschlossene Umfangswand 23, welche durch symmetrisch zur Längsmittelebene der Vorrichtung verlaufende Kreisbögen gebildet ist, und eine offene Seite 24 hat. Die durch die Bögen gebildete Wand 23 verhindert, daß das Spritzmittel nach oben austritt. An den seitlichen unteren Enden des Aufsatzes 21 ist jeweils eine Schwenkhaube 25 angelenkt, die im wesentlichen als Kreissegment ausgebildet ist und ebenfalls eine geschlossene Umfangswand 26 aufweist. Die Hauben 25 sind über die Aufsatzhälften und von diesen wegschwenkbar, um den Ausblasbereich des Luftaustrittskanals zur Seite verändern zu können.

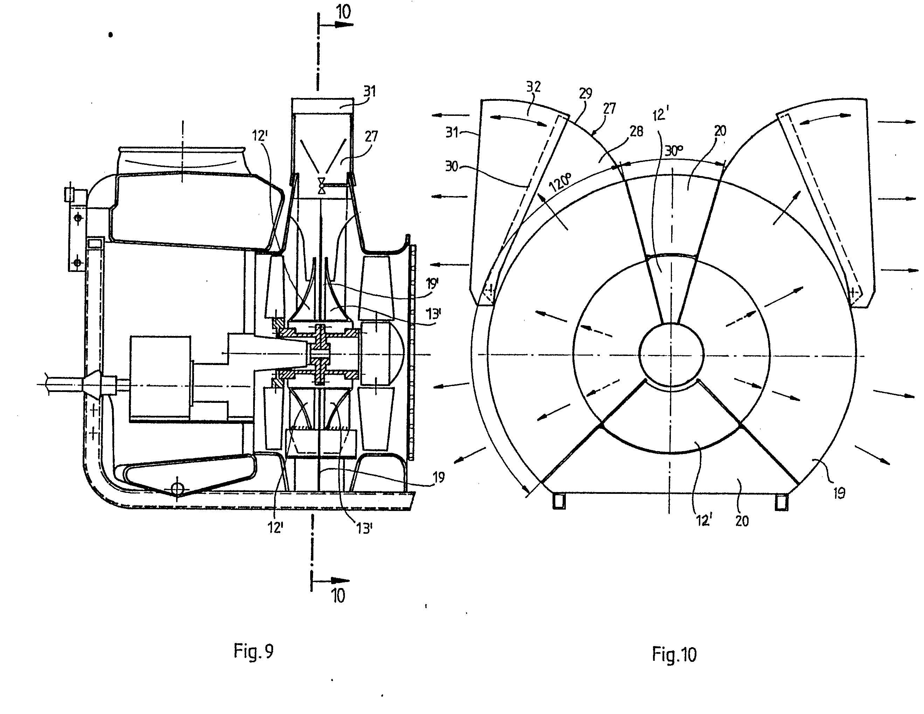

Die Ausführungsform nach den Figuren 9 und 10 entspricht im wesentlichen jener nach Figur 6, mit dem Unterschied, daß an den nach oben verschlossenen Umfangsabschnitt des Luftaustrittskanals seitlich zwei Aufsätze 27 anschließen, die parallele Stirnwände 28, eine kreisbogenförmige verschlossene Umfangswand 29, welche sich über einen vorbestimmten Winkel erstreckt, und eine offene Seite 30 haben. Die Aufsätze 27 sind mit schwenkbaren Abdeckhauben 31 mit geschlossener Umfangswand 32 versehen, ähnlich wie die Ausführungsform nach den Figuren 7 und 8.

Die erläuterten Ausführungsbeispiele können im Rahmen des allgemeinen Erfindungsgedankens noch verschiedentlich abgewandelt werden. So kann die Form der Luftleiteinrichtungen bzw. der Leitschaufeln derselben den jeweiligen Strömungserfordernissen und gewünschten Luftaustrittswinkeln angepaßt werden. Die Mündung des Luftaustrittskanals kann auch unter einem von 90° zur Gerätelängsachse abweichenden Winkel orientiert werden. Ferner können Laufräder mit verstellbaren Schaufeln verwendet werden. Die Aufsätze und deren Schwenkhauben können ebenfalls eine von der dargestellten abweichende Form erhalten.

Ansprüche:

1. Spritzgerät, insbesondere für landwirtschaftliche Zwecke, mit einem von einem Fahrzeug abstützbaren Spritzmittelbehälter (2), aus dem mittels einer Pumpe (5) quer zur Fahrtrichtung orientierte Spritzdüsen (16) mit Spritzmittel gespeist werden, einem Axialgebläse (8), das einen Trägerluftstrom für das von den Düsen abgegebene Spritzmittel erzeugt, und einem Luftaustrittskanal (14) für den Trägerluftstrom, wobei der Spritzmittelbehälter ringförmig in sich geschlossen ausgebildet ist und einen das Gebläsegetriebe (6) und die Pumpe aufnehmenden Tunnel (4) bildet, dadurch gekennzeichnet, daß das Axialgebläse (8) als Doppelgebläse mit zwei axial hintereinander geschalteten Laufrädern (9, 10) ausgebildet ist, daß das in axialer Richtung vordere Axialgebläse (9) die Gebläseluft stirnseitig über den Tunnel (4) ansaugt, wogegen das in axialer Richtung hintere Axialgebläse (10) über die hintere Gerätestirnseite ansaugt, und daß der die Spritzdüsen (15) beaufschlagende, im wesentlichen quer zur Fahrtrichtung orientierte Luftaustrittskanal (14) für beide Gebläse gemeinsam vorgesehen ist.

2. Spritzgerät nach Anspruch 1, bei welchem dem Luftaustrittskanal (14) für den Trägerluftstrom auf jeder Gebläseseite ein Umlenkboden (12, 13) zugeordnet ist und der Luftaustrittskanal in seinem unteren Teil über einen vorbestimmten Umfangsabschnitt (20) verschlossen ist, dadurch gekennzeichnet, daß in der Mitte zwischen den voneinander beabstandeten Umlenkböden (12, 13) eine sich quer zur Fahrtrichtung erstreckende Prallplatte (19) angeordnet ist, die mit den Umlenkböden (12, 13) Luftumlenkkanäle (19') begrenzt, über welche der im nach unten verschlossenen Umfangsabschnitt des Austrittskanals über eine Öffnung (12', 13' der Umlenkböden axial angesaugte Luftstrom auf den offenen Umfangsabschnitt des Austrittskanals, dessen Winkelerstreckung vorzugsweise etwa 270° beträgt, im wesentlichen gleichmäßig verteilt wird.

3. Spritzgerät nach Anspruch 1, bei welchem dem Luftaustrittskanal (14) für den Trägerluftstrom auf jeder Gebläseseite

0167518

ein Umlenkboden (12, 13) zugeordnet ist und der Luftaustrittskanal in seinem unteren Teil über einen vorbestimmten Umfangsabschnitt (20) verschlossen ist, dadurch gekennzeichnet, daß der Luftaustrittskanal (14) auch in seinem oberen Bereich über einen Umfangsabschnitt (20') von etwa 30° - 60° verschlossen ist, und daß in der Mitte zwischen den voneinander beabstandeten Umlenkböden (12, 13) eine sich quer zur Fahrtrichtung erstreckende Prallplatte (19) angeordnet ist, die mit den Umlenkböden Luftumlenkkanäle (19') begrenzt, über welche der im nach unten und nach oben verschlossenen Umfangsabschnitt des Austrittskanals über Öffnungen (12', 13', 12", 13") der Umlenkböden axial angesaugte Luftstrom auf die beiden offenen seitlichen Umfangsabschnitte des Austrittskanals im wesentlichen gleichmäßig verteilt wird.

4. Spritzgerät nach Anspruch 2, dadurch gekennzeichnet, daß auf zumindest einem oberen Umfangsabschnitt des Luftaustrittskanals (14) ein diesen verlängernder Aufsatz (21; 27) mit einer nach oben geschlossenen Umfangswand (23; 29) vorgesehen ist, wobei am unteren Ende des Aufsatzes eine diesem angepaßte Abdeckhaube (25; 31) mit geschlossener Umfangswand (26; 32) angelenkt ist, die vom Aufsatz in eine den Aufsatzbereich weiter verlängernde Stellung nach außen schwenkbar ist.

5. Spritzgerät nach einem der Ansprüche 1 bis 4, dadurch gekennzeichnet, daß die Laufräder (9, 10) der beiden Axialgebläse auf einer gemeinsamen Welle (11) sitzen und gegensinnig gekrümmte Schaufeln (9', 10') tragen.

6. Spritzgerät nach einem der Ansprüche 1 bis 5, dadurch gekennzeichnet, daß zwischen dem Spritzmittelbehälter (2) und dem diesem zugekehrten Axialgebläse (9) zusätzliche Luftansaugöffnungen vorgesehen sind.

7. Spritzgerät nach einem der Ansprüche 1 bis 6, dadurch gekennzeichnet, daß die Spritzdüsen (16) auf beiden Geräteseiten auf zur Vertikalen geneigt verlaufenden Leisten (18) montiert sind.

Fig. 1

Fig.2

Fig.3

Fig.4

Fig.5

0167518

Fig.6

0167518

Fig.8

Fig.7

0167518

Fig.10

Fig.9